(19) Europäisches Patentamt
European Patent Office
Office européen des brevets

(11) **EP 4 445 006 B1**

(12) **FASCICULE DE BREVET EUROPEEN**

(45) Date de publication et mention
de la délivrance du brevet:
**22.10.2025   Bulletin 2025/43**

(21) Numéro de dépôt: **22840791.2**

(22) Date de dépôt: **06.12.2022**

(51) Classification Internationale des Brevets (IPC):
**F02C 7/232** *(2006.01)*     **F02C 9/26** *(2006.01)*
**F02C 7/236** *(2006.01)*

(52) Classification Coopérative des Brevets (CPC):
**F02C 7/232; F02C 7/236; F02C 9/263;**
F05D 2260/80; F05D 2270/3015

(86) Numéro de dépôt international:
**PCT/FR2022/052259**

(87) Numéro de publication internationale:
**WO 2023/105157 (15.06.2023 Gazette 2023/24)**

(54) **PROCÉDÉ POUR ESTIMER UNE DÉRIVE D'UNE POMPE DE CARBURANT DE TURBOMACHINE**

VERFAHREN ZUR SCHÄTZUNG EINER DRIFT EINER KRAFTSTOFFPUMPE EINES
TURBINENMOTORS

METHOD FOR ESTIMATING A DRIFT OF A TURBINE ENGINE FUEL PUMP

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:   **09.12.2021   FR 2113231**

(43) Date de publication de la demande:
**16.10.2024   Bulletin 2024/42**

(73) Titulaire: **SAFRAN AIRCRAFT ENGINES
75015 Paris (FR)**

(72) Inventeurs:
• **PORA, Loïc
77550 MOISSY-CRAMAYEL (FR)**
• **GARNIER, Virgile Nicolas Bastien
77550 MOISSY-CRAMAYEL (FR)**

(74) Mandataire: **Regimbeau
20, rue de Chazelles
75847 Paris Cedex 17 (FR)**

(56) Documents cités:
FR-A1- 3 094 086         US-A- 5 111 653
US-A1- 2012 219 429      US-B2- 7 431 015

EP 4 445 006 B1

# Description

## DOMAINE DE L'INVENTION

L'invention concerne les circuits de carburant des turbomachines.

## ETAT DE LA TECHNIQUE

Lors de son fonctionnement, un turboréacteur brûle du carburant dans ses chambres de combustion. A cette fin, des pompes, en particulier une pompe principale, injectent le carburant dans les chambres par l'intermédiaire d'un bloc hydromécanique de dosage (également désigné par l'acronyme FMU pour l'expression anglaise *fuel metering unit*). Ce dernier a pour rôle de doser la bonne quantité de carburant à injecter dans le moteur et de recirculer l'excès en amont du circuit de carburant. Ce bloc hydromécanique est en liaison avec les injecteurs et le bloc de pompage et est commandé par un boitier électronique.

Nous nous intéressons ici au vieillissement de la pompe à carburant principale. En effet, à l'issue d'un fonctionnement prolongé, certaines de ses caractéristiques évoluent. Cela peut être dû à des modifications de jeux, à l'apparition de rayures ou à des modifications de profils de dents liées à de la cavitation. Dans un cas extrême, il serait possible que la pompe ne puisse plus fournir assez de débit lorsqu'un redémarrage en vol est requis, quand bien même le débit serait suffisant pour un démarrage au sol.

Il n'est pas possible de connaitre le potentiel en débit de la pompe principale sauf à prévoir une procédure d'essai reproductible ainsi que l'intégration d'un capteur de débit sur le circuit de carburant.

Actuellement, l'état de la pompe est contrôlé suivant les conseils du service après-vente du constructeur. A intervalles de temps réguliers, on teste la pompe pour vérifier son bon fonctionnement. Cet essai est réalisé dans les locaux techniques de la compagnie ou par un renvoi chez le fournisseur. Ainsi, pour éviter d'atteindre le potentiel maximal de la pompe, des maintenances préventives sont recommandées, mais elles ne sont pas obligatoires. Si une telle maintenance a lieu, elle demande des moyens d'essais ou la mise à disposition de pièces de rechange, voire des immobilisations de moteur. Si une détérioration est observée, la pièce est changée sans que l'on puisse déterminer le temps réel de fonctionnement avant dégradation, ni même les conditions d'utilisation ayant entrainé cette dernière.

Sur certains turboréacteurs on effectue une vérification au démarrage en observant la vitesse de rotation nécessaire pour mettre en mouvement certaines géométries variables, mais cette technique renvoie un nombre important d'alertes erronées.

Un but de l'invention est d'évaluer plus facilement l'usure de la pompe pour éviter les déposes inutiles, assurer en permanence les marges de fonctionnement et faire le cas échéant remonter une alerte préventive concernant la pompe.

Le document US 2012 0219429 décrit un procédé pour estimer une dérive d'une pompe de carburant de turbomachine.

## EXPOSE DE L'INVENTION

A cet effet, on prévoit selon l'invention un procédé pour estimer une dérive d'une pompe de carburant de turbomachine,
le procédé comprenant les étapes suivantes :

- mesure d'une différence de pression à des bornes d'un doseur alimenté en carburant par la pompe ;
- calcul d'une position d'une soupape régulant la différence de pression ;
- détermination d'au moins une position estimée de la soupape à partir de la différence de pression et d'au moins une fonction de référence donnant la différence de pression en fonction de la position;
- calcul d'au moins une valeur représentant une dérive de la pompe au moyen de la position calculée et de la position estimée ; et
- comparaison de la valeur avec un seuil prédéterminé.

Ainsi l'invention prend en compte l'interaction entre le débit traversant la pompe et celui recirculé à travers la soupape régulatrice afin de déterminer le vieillissement de la pompe. Elle met en œuvre une analyse de la dérive de la pompe en utilisant le bloc hydromécanique de dosage et des moyens de commande. Elle s'appuie sur la caractérisation d'une loi reliant la différence de pression aux bornes du doseur et l'ouverture de la soupape. Lors du fonctionnement, un calculateur prend en compte une valeur de la différence de pression mesurée aux bornes du doseur pour obtenir l'ouverture estimée de la soupape et la comparer avec l'ouverture calculée. Cet écart reflète une différence entre le débit obtenu lors de la première utilisation de la pompe et celui obtenu avec la pompe à l'issue d'une période de fonctionnement. En permettant d'estimer l'étendue du vieillissement de la pompe, l'invention procure des gains de temps de maintenance. Elle permet aussi d'alerter préventivement sur l'étendue du vieillissement afin de déclencher si besoin une dépose sans attendre la survenue d'une panne, telle qu'une impossibilité à rallumer le moteur.

Dans un mode de réalisation, le procédé comprend une détermination de la ou des fonctions de référence.

Avantageusement, la détermination de la fonction a lieu après une livraison de la turbomachine et avant une exploitation commerciale de la turbomachine.

En effet, l'acquisition peut se faire par des essais lors de la réception de la turbomachine. Ces essais tiendront compte des erreurs liées aux variations de débit de fuite du reste du système. Si la précision n'est pas suffisante, on peut appliquer un coefficient correcteur.

De préférence :

- on détermine deux positions estimées de la soupape à partir de la différence de pression et de deux fonctions de référence donnant la différence de pression en fonction de la position ;
- on calcule deux valeurs représentant la dérive de la pompe au moyen de la position calculée et des positions estimées : et
- on compare au moins l'une des valeurs avec le seuil prédéterminé.

On peut prévoir que :

- on calcule au moins une valeur instantanée au moyen de la position calculée et de la position estimée ; et
- au moyen de la valeur instantanée, on met à jour au moins une valeur moyenne représentant la dérive de la pompe.

On peut prévoir que :

- on calcule deux valeurs instantanées au moyen de la position calculée et des positions estimées ; et
- au moyen des valeurs instantanées, on met à jour deux valeurs moyennes représentant la dérive de la pompe.

On peut prévoir que la ou chaque moyenne est une moyenne mobile.

On prévoit aussi selon l'invention un circuit de carburant de turbomachine, le circuit comprenant :

- au moins une pompe,
- un doseur configuré pour être alimenté en carburant par la pompe, le doseur comprenant un capteur d'une différence de pression à des bornes du doseur,
- une soupape configurée pour réguler une différence de pression aux bornes du doseur, et
- des moyens aptes à commander la mise en œuvre d'un procédé selon l'invention.

Dans un mode de réalisation, la pompe est une pompe volumétrique.

On prévoit aussi selon l'invention une turbomachine comprenant un circuit de carburant selon l'invention.

## DESCRIPTION DES FIGURES

Nous allons maintenant présenter un mode de réalisation de l'invention à titre d'exemple non-limitatif à l'appui des dessins sur lesquels :

- la figure 1 est un schéma illustrant le circuit de carburant au sein d'un turboréacteur pour un mode de réalisation de l'invention ;
- la figure 2 est un schéma détaillant ce circuit de carburant ;
- la figure 3 est un schéma détaillant le rôle de la soupape dans ce circuit ;
- la figure 4 montre des courbes des fonctions donnant la différence de pression en fonction de la position de la soupape ;
- la figure 5 est un organigramme des étapes du procédé de l'invention dans le présent mode de mise en œuvre ;
- la figure 6 est une courbe représentant la dérive %Q du débit associée au vieillissement de la pompe en fonction du temps ; et
- la figure 7 est une vue analogue à la figure 4 dans un autre exemple.

## Description du moteur

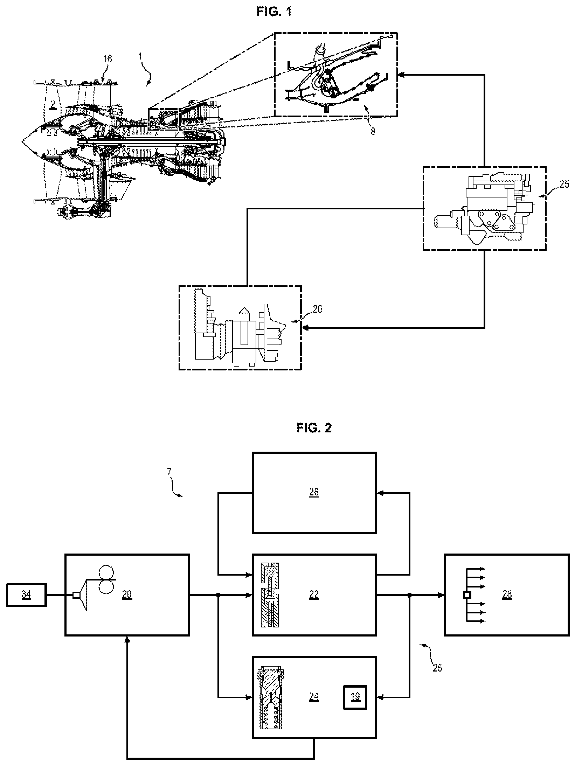

Dans le présent exemple, on considère un turboréacteur 1 d'aéronef formant une turbomachine à double flux et double corps comprenant un stator et un rotor. Il présente un axe principal qui sert d'axe de rotation du rotor par rapport au stator. Il comprend d'amont en aval, donc de gauche à droite sur la figure 1, une soufflante 2, un compresseur basse pression, un compresseur haute pression, une ou plusieurs chambres de combustion 8, une turbine haute pression et une turbine basse pression. Ces éléments, à l'exception de la soufflante, font partie d'une partie centrale du turboréacteur. Leurs parties mobiles à rotation autour de l'axe forment le rotor.

Le compresseur haute pression, la chambre de combustion 8 et la turbine haute pression forment un corps à haute pression qui, conjointement avec le compresseur basse pression et la turbine basse pression, définit une veine principale d'écoulement d'air.

Un carter de soufflante 16 entoure la soufflante 2 et la partie centrale de façon à former un compartiment de soufflante et à définir une veine secondaire d'écoulement d'air.

En référence à la figure 1, lors de son fonctionnement, le turboréacteur 1 brûle du carburant dans ses chambres de combustion 8.

A cette fin, il comprend un circuit de carburant 7 comprenant :

- au moins une pompe 20,
- un doseur 22 configuré pour être alimenté en carburant par la pompe,
- une soupape 24 configurée pour réguler une différence de pression aux bornes du doseur 22, et
- des moyens de commande formés par un boitier électronique 26 et aptes notamment à commander la mise en œuvre du procédé de l'invention.

La pompe 20 est ici une pompe volumétrique.

Elle forme un bloc de pompage apte à injecter le carburant dans les chambres de combustion 8 par l'intermédiaire du doseur 22. On suppose ici que le bloc de pompage comprend une seule pompe 20 mais l'invention s'applique de la même façon en remplaçant la pompe par un bloc de plusieurs pompes.

Le doseur 22 et la soupape 24, forment un bloc hydromécanique de dosage 25 ou encore FMU. Le bloc FMU 25 a pour rôle de doser la quantité de carburant à injecter dans le moteur 1 et de recirculer l'excès plus en amont dans le circuit de carburant, en amont de la pompe. Il est configuré pour recevoir du carburant de la pompe 20 et pour en communiquer à des injecteurs 28.

Le doseur comprend un capteur 19 d'une différence de pression à des bornes du doseur.

En référence à la figure 2, le circuit de dosage 7 s'étend depuis un réservoir de carburant 34 jusqu'à la chambre de combustion 28. Il comporte une ligne d'alimentation du doseur 11 dite à haute-pression, reliant une sortie de la pompe 20 à l'entrée du doseur 22. Le doseur est adapté pour délivrer un débit massique cible aux injecteurs 28 de la chambre de combustion 8 à partir d'un débit initial qui lui est délivré par la pompe via la ligne 11. La soupape de régulation 24 est apte à réguler le débit délivré au doseur 22. En particulier, elle est apte à renvoyer en entrée de la pompe 20 un débit excédentaire de carburant parvenant au doseur 22, en fonction de la différence de pression aux bornes du doseur.

Pour ce faire, la soupape 24 comprend un cylindre 31 et un tiroir 32 monté mobile à coulissement dans le cylindre 31. Nous allons décrire un mode de réalisation de la soupape mais d'autres modes de réalisation peuvent être envisagés.

Le tiroir 32 comprend à ses extrémités deux sections de commande de déplacement 320, 321, qui permettent de commander la position du tiroir dans le cylindre. Une première section de commande 320 est reliée à la ligne 11 à haute-pression. Elle reçoit donc un débit de carburant à la même pression que le carburant délivré en entrée du doseur 22. Une deuxième section de commande 321 est reliée à une sortie du doseur.

De plus, le cylindre 31 comprend un premier orifice d'entrée 310 relié à la ligne 11 à haute pression, et un deuxième orifice de sortie 311 relié à une ligne 12 de retour à basse-pression, cette ligne reliant l'orifice 311 à l'entrée de la pompe 20. Par orifice, on entend une ouverture d'évacuation mettant en communication une cavité interne de la soupape 24 avec une ligne de circulation de carburant, quelle que soit la géométrie de l'ouverture. Par exemple, un orifice peut s'étendre sur tout ou partie de la circonférence du cylindre.

Le tiroir 32 est en outre conformé pour, en fonction de sa position dans le cylindre, sélectivement autoriser ou interdire une communication de fluide entre les orifices 311 et 310, et moduler le débit de fluide circulant depuis la ligne 11 vers la ligne 12 en passant par les orifices 310 et 311 de la soupape 24, lorsque cette communication de fluide est autorisée.

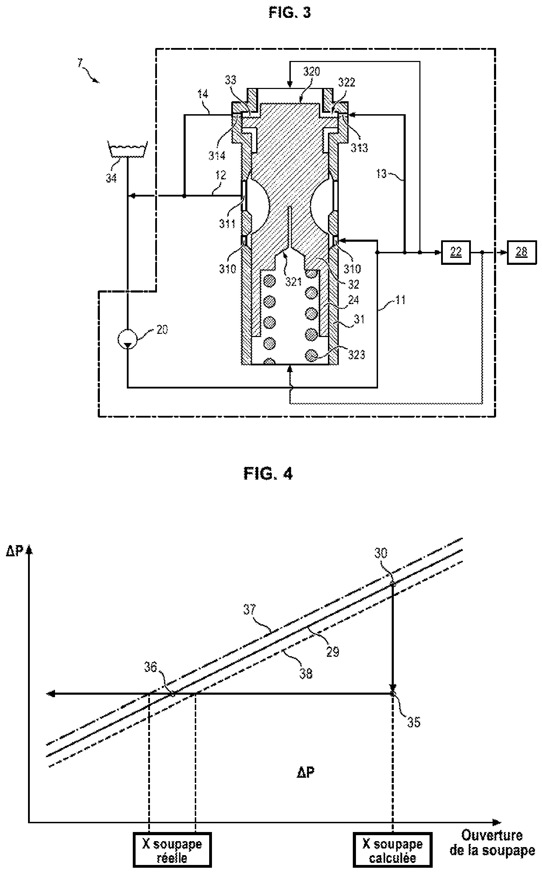

En particulier, un accroissement de la pression de carburant appliquée à la première section de commande 320 entraîne un déplacement du cylindre vers la section opposée (sur la figure 3, vers le bas), qui tend à libérer l'orifice 11 pour accroître le débit recirculé vers la ligne 12.

De plus, la soupape 24 comprend un organe de rappel 323, par exemple un ressort en appui contre la deuxième section de commande 321, afin de ramener le tiroir dans une position d'équilibre lorsque la pression appliquée à la première section de commande diminue.

Cela permet de réguler mécaniquement le différentiel de pression de carburant aux bornes du doseur, en adaptant l'ouverture de la soupape au besoin de recirculation du surplus de débit délivré par la pompe.

Le différentiel de pression est dépendant de l'équilibre du tiroir de la soupape. La raideur du ressort impacte cet équilibre. Pour assurer la précision, il est parfois utile de mettre en place un système de compensation de l'effet de la raideur. Celle-ci peut se faire en ajoutant une chambre 33 dont la pression est modulée par les ouvertures 313 et 314.

A l'intérieur du cylindre 31 de la soupape est définie une chambre 33, adjacente à une section supplémentaire de commande 322. La chambre est délimitée sur un côté par cette section supplémentaire, de sorte que la pression de fluide contenue par la chambre 33 puisse s'exercer sur la section supplémentaire de commande 322.

De plus, le cylindre 31 comprend un ou plusieurs orifices supplémentaires 313, 314, ces orifices débouchant dans la chambre 33. Le circuit de dosage comprend en outre une ligne de prélèvement de débit 13, dont une extrémité amont est reliée à la ligne 11 à haute-pression et une extrémité aval est reliée à l'un des orifices 313. Le circuit de dosage de carburant comprend en outre une ligne de renvoi 14 du débit, dont une extrémité amont est reliée à l'autre orifice 314 et une extrémité aval est reliée à la ligne 12.

Ce procédé permet de modifier, selon l'ouverture de la soupape, la pression de la chambre 33 et ainsi de corriger l'effet de la variation de l'effort induit par le ressort sur la régulation du différentiel de pression aux bornes du doseur. De ce fait, contrairement à la représentation de la figure 4, il est possible d'avoir une loi de variation de l'ouverture de la soupape régulatrice en fonction du ΔP non linéaire. Cela ne change pas le principe et l'application de l'invention. Par la suite, nous supposerons en tant qu'exemple une loi linéaire de variation du ΔP en fonction de l'ouverture de la soupape.

Principe de l'invention

Nous présentons maintenant le principe de l'invention.

Le débit de la pompe 20 est une fonction de sa vitesse de rotation à laquelle est appliqué un rendement dépendant de la vitesse de rotation, de la différence de pression et de la température.

Ce débit est divisé, sur un point stabilisé, entre un débit injecté et un débit recirculé par le doseur 22. Le débit recirculé passe majoritairement par la soupape régulatrice 24 et dépend de la différence de pression aux bornes de la pompe 20. Ainsi, la position de la soupape 24 reflète le débit délivré par la pompe à des conditions de température, de pression et de vitesse de rotation données, ainsi que selon le débit injecté.

Appelons X la grandeur représentant la section d'ouverture de la soupape 24, exprimée en unité de surface. Cette grandeur représente aussi la position du tiroir 32 dans le cylindre 31. Nous pouvons estimer l'ouverture réelle $X_{est}$ de la soupape lorsqu'un débit $Q.(1+\varepsilon_{pompe})$ la traverse, ainsi que l'ouverture calculée $X_{calc}$ lorsqu'on pense que la soupape est traversée par un débit Q à l'aide des formules suivantes (1) et (2) :

$$X_{est} = \frac{Q.(1+\varepsilon_{pompes}).\rho(T)-Wf}{K*\sqrt{\rho(T).(Php-Plp)}} \quad (1)$$

$$X_{calc} = \frac{Q.\rho(T)-Wf}{K*\sqrt{\rho(T).(Php-Plp)}} \quad (2)$$

Où :

- $\rho$ est la densité du carburant en kg/l,
- $W_f$ est le débit massique injecté par le doseur 22 en kg/h,
- $P_{hp}$ est la pression en sortie de la pompe 20,
- $P_{lp}$ est la pression en entrée de la pompe, et
- K est un coefficient propre à la géométrie de la soupape 24.

Nous n'avons pas accès à la valeur du débit Q mais seulement à la vitesse de rotation de l'arbre moteur. C'est donc par l'intermédiaire des rapports de réduction et de la cylindrée de la pompe que nous calculons Q. Or si la pompe s'use, son rendement diminue. Les fonctions que nous utilisons pour connaitre Q à partir de la vitesse de rotation ne sont alors plus exactes.

Lors d'une dérive de la pompe 20, son débit Q diminue. Or :

$$Q = W_f + \text{débit recirculé}$$

Puisque le débit dosé $W_f$ ne diminue pas, c'est le débit recirculé qui diminue, entrainant une diminution de l'ouverture X de la soupape. Autrement dit, lorsque la pompe est usée, la soupape est plus fermée que lorsque la pompe était neuve.

L'objectif est alors de déterminer le plus précisément possible la position réelle $X_{est}$ de la soupape pour quantifier la dérive de la pompe ($\varepsilon_{pompes}$) résultant de son vieillissement.

Prenons l'exemple d'une variation linéaire du

$\Delta P$ en fonction de la position de la soupape. En réalité, ce n'est pas forcément le cas, mais le principe reste applicable quelle que soit la forme de cette loi de variation. Il s'agit de la courbe centrale 29 sur la figure 4 montrant l'évolution linéaire de $\Delta P$ en fonction de l'ouverture X de la soupape, et réciproquement. Nous préconisons que cette courbe 29 soit acquise en début de vie pour chaque moteur (par exemple à la réception de l'équipement). Cette courbe représente donc le fonctionnement nominal du système.

L'équilibre de la soupape s'écrit alors avec la formule suivante (3) :

$$\Delta P = \frac{(F0+réglage)+k.X}{S} \quad (3)$$

Où :

- $\Delta P$ est la différence de pression de commande, égale à la différence de pression aux bornes du doseur,
- F0+réglage est la force du ressort de soupape 323,
- k est la raideur du ressort, et
- S est la surface d'application des pressions.

$\Delta P$ dépend essentiellement de X. Si X varie, $\Delta P$ varie. L'équation (3) permet de calculer une position $X_{est}$ de la soupape en fonction de la valeur mesurée $\Delta P$ dans le cas d'une soupape linéaire et correspond à la courbe 29.

Nous allons observer la dérive de la pompe par le prisme de la variation qu'elle entraine sur le $\Delta P$, dont la mesure est réalisée sur le bloc FMU 25, pour améliorer la précision de dosage.

Supposons un régime de fonctionnement en début de vie qui fait que la soupape a une ouverture donnée X représentée par le point 30 sur la courbe. Avec le vieillissement de la pompe, le débit Q diminue, donc l'ouverture réelle X de la soupape aussi.

La valeur de $\Delta P$ mesurée diminue mais sans que le système ne change sa valeur calculée $X_{calc}$ de l'ouverture de la soupape. On se trouve alors par exemple au point 35, situé hors de la courbe 29. Dès lors, la valeur mesurée de $\Delta P$ n'est pas cohérente avec celle qu'elle devrait avoir pour l'ouverture de soupape X calculée.

Grace à la courbe de référence 29, nous cherchons alors quelle ouverture réelle $X_{est}$ de la soupape pourrait expliquer le $\Delta P$ mesuré. Il s'agit donc de projeter la valeur de $\Delta P$ mesurée vers la gauche sur la courbe 30 pour obtenir l'abscisse du point 36. Cela permet d'obtenir une valeur $X_{est}$.

L'équation d'équilibre (3) est valide avec l'hypothèse d'une soupape sans compensation mécanique, i.e. l'hypothèse d'une loi linéaire entre le différentiel de pression $\Delta P$ et la position X de la soupape. L'invention ne se limitant pas à ce cas idéal, nous préconisons d'acquérir la courbe 29 en début de vie du moteur pour avoir la loi réelle (incluant les fuites et les compensations) reliant $\Delta P$ à X. D'où le besoin de projeter $\Delta P$ vers la gauche sur la courbe de référence 29 pour obtenir la valeur réelle de X.

Avec la valeur estimée $X_{est}$ de l'ouverture (ou de la position) de la soupape ainsi obtenue, nous pouvons quantifier la dérive de la pompe par rapport à la courbe de référence 29. En effet, il suffit d'appliquer la formule (4) :

$$\%Q = \frac{Xest - Xcalc}{Xcalc + \frac{Wf}{K.\sqrt{Php - Plp}}} \quad (4)$$

Cette formule découle de la combinaison des formules (1) et (2).

En réalité, il est difficile de travailler avec des intersections simples. En effet, $\Delta P$ n'est pas parfaitement défini pour une ouverture de soupape X donnée. Pour une ouverture donnée X, $\Delta P$ sera dans une certaine plage autour de la courbe 29. Cette plage est représentée par les deux courbes de référence 37 et 38 situées de part et d'autre de la courbe de référence 29 sur la figure 4. Donc, en projetant vers la gauche, nous n'obtenons pas une valeur unique $X_{est}$, mais une plage de valeurs [$X_{est}$1 ; $X_{est}$2] délimitée par les deux valeurs $X_{est}$1 et $X_{est}$2 obtenues respectivement par les courbes 37 et 38.

De même, on obtient donc une plage de valeurs [%QB ; %QH] de %Q délimitée par les deux valeurs %QB et %QH obtenues avec ces deux valeurs $X_{est}$1 et $X_{est}$2. La valeur %Q représente la dérive du débit associée au vieillissement de la pompe. A chaque calcul de %Q, nous obtenons la plage de valeurs [%QB ; %QH] dans laquelle se trouve la valeur réelle de la dérive de la pompe.

Il s'agit ensuite de réaliser ce calcul régulièrement pour faire une moyenne mobile [%QBm ; %QHm] au cours du temps de la plage [%QB ; %QH]. L'information pertinente n'est pas la plage de valeurs de %Q calculée mais son évolution au cours du temps. C'est par son évolution que nous pouvons observer une « dérive » par rapport à son comportement d'origine. La moyenne mobile [%QBm ; %QHm] de la plage est calculée sur une période constante glissante T, mobile dans le temps. Chaque fois qu'on obtient une nouvelle plage de valeurs de %Q, on met à jour la moyenne mobile.

Cette moyenne mobile des plages de %Q est calculée par exemple de la façon suivante. Supposons que chaque plage de %Q comprend un borne haute %QH et une borne basse %QB et que la plage moyenne formant la moyenne mobile comprend un borne haute %QHm et une borne basse %QBm. On calcule %QHm comme la moyenne des bornes hautes %QH et %QBm comme la moyenne des bornes basses %QB.

On compare ensuite la plage moyenne à une plage de référence ayant des bornes haute et basse de référence prédéterminée lors de la mise en service du moteur.

Il suffit alors de prévoir un seuil prédéterminé, par exemple 10%. Si une valeur associée à la moyenne mobile de la plage de %Q, par exemple sa borne basse %QBm, a une différence de plus de de 10% par rapport à la valeur de la borne basse de référence, on déclenche une alerte indiquant une menace sur la qualité du fonctionnement de la pompe et requérant une maintenance. C'est en fonction de l'analyse de la précision souhaitée que l'on pourra remonter une information de demande de maintenance.

Tous ces éléments peuvent faire l'objet d'une acquisition lors de séquences de démarrage et/ou en continu sur le vol.

Une mention peut ici être faite au sujet des turbomachines à géométrie variable. Il s'agit des moteurs dans lesquels le compresseur comprend des ailettes mobiles qui permettent si besoin de laisser s'échapper de l'air vers l'extérieur pour éviter un effet de pompage. Ces ailettes sont déplacées par des vérins eux-mêmes actionnés par le carburant agissant comme fluide de commande. Les géométries variables sont donc aussi alors alimentées par la pompe. Lorsqu'on déplace des géométries, le débit dosé reste identique, le débit délivré par les pompes reste identique, mais le débit recirculé par la soupape diminue. Dès lors, nous obtenons des pics ou des creux de la valeur $X_{est}$. Il est envisageable d'estimer le débit consommé par le déplacement des géométries variables et de l'additionner au débit recirculé, mais il est préférable d'acquérir les points de mesure mis en œuvre dans le procédé au sol ou en croisière, c'est-à-dire lorsque les positions des géométries sont connues ou du moins stables et déjà incluses dans les courbes de référence acquises en début de vie.

En général, les pompes à engrenage ont une caractéristique variant de l'ordre de +/-5%, surtout à basse vitesse. Lors du dimensionnement, une marge de conception est prise par le fournisseur. Cette marge est de l'ordre de 15% du débit à basse vitesse. Ainsi, une précision de l'ordre de 10% sur le débit de la pompe estimé par le procédé de l'invention permettrait de détecter une pompe ayant dérivé jusqu'à la valeur minimale de débit assurant le bon fonctionnement.

En ayant mis en place des capteurs pour améliorer la précision du dosage et une estimation de la densité du carburant et avec l'utilisation de l'acquisition du régime, nous avons estimé en étudiant les variables influentes qu'on obtient une précision de plus ou moins 5% pour détecter cette dérive. Cette estimation peut être précisée par une étude au niveau du système, en analysant les différents scénarios d'acquisition de courbe de référence possibles, ainsi que les autres facteurs pouvant influer sur l'estimation correcte de la loi de débit de la pompe, comme par exemple l'impact des régimes transitoires sur l'estimation. Prévoir une analyse en continue de l'écart entre le débit de la pompe estimé et celui de référence permet que l'alerte se fasse sur une moyenne mobile de sorte à couvrir les effets de ces transitoires.

Le boitier de commande 26 peut servir par ailleurs à améliorer la réception de l'équipement, la précision du dosage et son utilisation sur le moteur. Pour cela, des capteurs peuvent être mis en place afin de corriger les différents postes d'incertitudes du bloc hydromécanique (densité, température, effort du ressort, ...).

Comme on l'a vu, en ajoutant le capteur 19 de différence de pression aux bornes du doseur et en utilisant le régime, il est possible d'estimer le débit de la pompe 20 à partir de l'estimation de l'ouverture de la soupape. Il est alors possible de vérifier l'état de la pompe à condition que la précision d'estimation soit supérieure aux marges de conception de la pompe.

Exemple de mise en œuvre

La mise en œuvre du procédé de l'invention pour estimer une dérive de la pompe de carburant 20 de la turbomachine 1 peut donc comprendre les étapes suivantes exécutées dans cet ordre en référence à la figure 4.

A l'étape 40, on détermine les fonctions de référence 37, 38 après la livraison de la turbomachine et avant son exploitation commerciale, les fonctions 37, 38 donnant la différence de pression $\Delta P$ en fonction de la position de la soupape. On utilise à cette fin des capteurs mis en place pour d'autres apports sur le bloc FMU (précision, détection de panne, ...). Dans le cas non-linéaire, les fonctions 37, 38 sont représentées chacun par un tableau de couple de valeurs enregistré dans les moyens de commande.

Les étapes suivantes sont mises en œuvre lors de l'exploitation de la turbomachine.

A l'étape 42, on détermine la vitesse de la pompe 20, puis on calcule son débit Q.

A l'étape 44, au moyen du capteur 19, on mesure une différence de pression $\Delta P$ aux bornes du doseur 22. Par ailleurs, on calcule la position $X_{calc}$ de la soupape 24 au moyen de l'équation (2).

A l'étape 46, on détermine deux positions estimées $X_{est}1$, $X_{est}2$ de la soupape à partir de la différence de pression $\Delta P$ et des deux fonctions de référence 37, 38, ce qui revient à projeter le point 35 de la figure 4 sur chacune des courbes 37, 38 pour obtenir les positions estimées.

A l'étape 48, on calcule deux valeurs instantanées %QB et %QH au moyen de la position calculée $X_{calc}$, des positions estimées $X_{est}1$, $X_{est}2$ et de l'équation 4. %QB et %QH sont les bornes de la gamme ou plage de %Q.

A l'étape 50, ces valeurs %QB et %QH servent à calculer une moyenne mobile [%QBm ; %QHm] de la plage de %Q sur une période de temps T prédéterminée. Pour cela, on détermine des moyennes mobiles de %QB et de %QH. On calcule ainsi des moyennes mobiles des bornes de la gamme. Lors des premiers cycles, on calcule chaque moyenne en prenant en compte toutes les valeurs correspondantes disponibles. Ensuite, lorsque la période T initiale est écoulée, on recalcule chaque moyenne pour les valeurs de la période T la plus récente pour la mettre à jour. Ainsi, au moyen des valeurs instantanées %QB et %QH, on met à jour les deux valeurs moyennes %QB$_m$, %QH$_m$ représentant les bornes de la moyenne mobile de la plage de la dérive de la pompe 20.

Enfin, on compare au moins l'une des valeurs %QB$_m$, %QH$_m$ avec le seuil prédéterminé. Si le ou les écarts calculés dépasse le seuil, on déclenche une alerte sur le degré de vieillissement de la pompe.

Compléments

Grace à l'acquisition de paramètres et à la caractérisation du comportement de la soupape 24 lors de la réception de l'équipement ou du moteur, l'invention permet de comparer en temps réel l'ouverture théorique et l'ouverture réelle de la soupape estimée à travers la mesure de $\Delta P$ et d'en déduire un écart de comportement de la pompe.

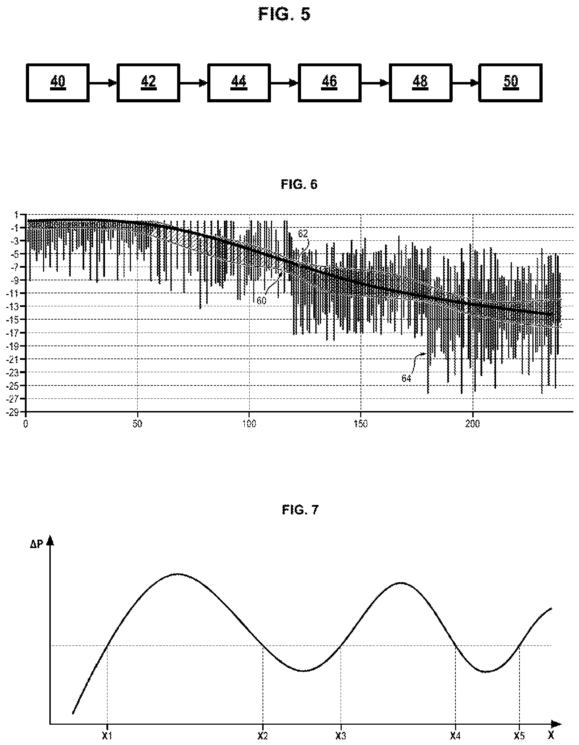

La figure 6 donne un aperçu des données attendues et illustre une estimation de ce que pourrait donner une courbe de %Q en fonction du temps. Chaque bande verticale 64 est issu d'une mesure et représente la plage de valeurs [%QB ; %QH] dans laquelle se trouve la valeur réelle de la dérive %Q de débit de la pompe. Au cours du temps, ces plages vont se déplacer vers le bas.

Le bandeau transparent central 60 représente l'information pertinente. Il s'agit de la moyenne mobile [%QBm ; %QHm] des plages 60 de dérive de la pompe. Elle est représentative des mesures effectuées durant la vie du moteur. On observe alors que le bandeau bleu dérive progressivement par rapport à sa valeur initiale. On peut ainsi déterminer un seuil d'alerte.

Dans cet exemple, les courbes 29, 37 et 38 38 sont issues d'une modélisation non linéaire de la soupape ce qui a pour conséquence que les bandes n'ont pas toutes la même amplitude alors qu'elles auraient eu la même avec une soupape linéaire.

Pour le calcul de la moyenne mobile [%QBm ; %QHm], on détermine %QBm comme le maximum des valeurs %QB au cours de la période glissante et %QHm comme le minimum des valeurs %QH au cours de la même période.

La courbe 62 représente la dérive réelle de la pompe.

L'unité de temps en abscisse pourra être choisie de différentes façons. On pourra ainsi déterminer la plage de dérive et mettre à jour la plage moyenne une fois par vol ou une fois tous les dix vols par exemple.

A la figure 7, on a illustré un exemple de l'allure d'une courbe non-linéaire de $\Delta P$ en fonction de la position X. Dans ce cas, la même courbe conduit à l'obtention de plusieurs valeurs X1 à X5 pour la position estimée de la soupape. On obtient donc plusieurs plages disjointes pour %Q ou encore une plage en plusieurs tronçons disjoints. Dans ce cas, l'étape de calcul de la plage moyenne [%QBm ; %QHm] met en œuvre la détermination de l'intersection des plages au cours de la période, ce qui tend à obtenir une plage moyenne [%QBm ; %QHm] à un seul tronçon.

L'invention ne nécessite pas un capteur de position spécifique sur la soupape 24 qui n'aurait pour utilité que cette surveillance et engendrerait un supplément de coût.

On pourra apporter à l'invention de nombreuses modifications sans sortir du cadre de celle-ci.

Dans une version simplifiée mais moins précise, le procédé comprend les étapes suivantes :

- calcul d'une position $X_{calc}$ de la soupape 24 ;
- détermination d'une position estimée $X_{est}$ de la soupape à partir d'une mesure de la différence de pression et d'une fonction de référence 29 donnant la différence de pression $\Delta P$ en fonction de la position;
- calcul d'une valeur $\%Q_m$ représentant une dérive de la pompe 20 au moyen de la position calculée $X_{calc}$ et de la position estimée $X_{est}$ ; et
- comparaison de la valeur avec un seuil prédéterminé.

**Revendications**

1. Procédé pour estimer une dérive d'une pompe de carburant (20) de turbomachine (1), le procédé comprenant les étapes suivantes :

    - mesure d'une différence de pression ($\Delta P$) à des bornes d'un doseur (22) alimenté en carburant par la pompe (20) ;
    - calcul d'une position ($X_{calc}$) d'une soupape (24) régulant la différence de pression ;
    - détermination d'au moins une position estimée ($X_{est}$) de la soupape à partir de la différence de pression ($\Delta P$) et d'au moins une fonction de référence (29, 37, 38) donnant la différence de pression ($\Delta P$) en fonction de la position;
    - calcul d'au moins une valeur ($\%Q_m$ ; $\%QB_m$, $\%QH_m$) représentant une dérive de la pompe (20) au moyen de la position calculée ($X_{calc}$) et de la position estimée ($X_{est}$) ; et
    - comparaison de la valeur avec un seuil prédéterminé.

2. Procédé selon la revendication précédente qui comprend une détermination de la ou des fonctions de référence (29, 37, 38).

3. Procédé selon la revendication précédente dans lequel la détermination de la fonction a lieu après une livraison de la turbomachine (1) et avant une exploitation commerciale de la turbomachine.

4. Procédé selon l'une des revendications précédentes dans lequel :

    - on détermine deux positions estimées ($X_{est}1$, $X_{est}2$) de la soupape à partir de la différence de pression ($\Delta P$) et de deux fonctions de référence (37, 38) donnant la différence de pression ($\Delta P$) en fonction de la position ;
    - on calcule deux valeurs ($\%QB_m$, $\%QH_m$) représentant la dérive de la pompe (20) au moyen de la position calculée ($X_{calc}$) et des positions estimées ($X_{est}1$, $X_{est}2$) ; et
    - on compare au moins l'une des valeurs ($\%QB_m$, $\%QH_m$) avec le seuil prédéterminé.

5. Procédé selon l'une des revendications précédentes dans lequel :

    - on calcule au moins une valeur instantanée ($\%Q$ ; $\%QB$, $\%QH$) au moyen de la position calculée ($X_{calc}$) et de la position estimée ($X_{est}$) ; et
    - au moyen de la valeur instantanée, on met à jour au moins une valeur moyenne ($\%QB_m$, $\%QH_m$) représentant la dérive de la pompe (20).

6. Procédé selon l'une des revendications précédentes dans lequel :

    - on calcule deux valeurs instantanées ($\%QB$, $\%QH$) au moyen de la position calculée ($X_{calc}$) et des positions estimées ($X_{est}1$, $X_{est}2$) ; et
    - au moyen des valeurs instantanées, on met à jour deux valeurs moyennes ($\%QB_m$, $\%QH_m$) représentant la dérive de la pompe (20).

7. Procédé selon l'une des revendications 5 ou 6 dans lequel la ou chaque moyenne ($\%Q_m$ ; $\%QB_m$, $\%QH_m$) est une moyenne mobile.

8. Circuit de carburant (7) de turbomachine (1), le circuit comprenant :

    - au moins une pompe (20),
    - un doseur (22) configuré pour être alimenté en carburant par la pompe, le doseur comprenant un capteur (19) d'une différence de pression à des bornes du doseur,
    - une soupape (24) configurée pour réguler une différence de pression aux bornes, et
    - des moyens (26) aptes à commander la mise en œuvre d'un procédé selon l'une quelconque des revendications précédentes.

9. Circuit selon la revendication précédente dans lequel la pompe (20) est une pompe volumétrique.

10. Turbomachine (1) comprenant un circuit de carburant (7) selon l'une des revendications 8 à 9.

## Patentansprüche

1. Verfahren zur Schätzung einer Drift einer Kraftstoffpumpe (20) eines Turbinenmotors (1),
   wobei das Verfahren die folgenden Schritte umfasst:

   - Messen einer Druckdifferenz ($\Delta P$) an den Anschlüssen eines Dosierers (22), der von der Pumpe (20) mit Kraftstoff versorgt wird;
   - Berechnen einer Position ($X_{calc}$) eines Ventils (24), das die Druckdifferenz regelt;
   - Bestimmen mindestens einer geschätzten Position ($X_{est}$) des Ventils anhand der Druckdifferenz ($\Delta P$) und mindestens einer Referenzfunktion (29, 37, 38), die die Druckdifferenz ($\Delta P$) in Abhängigkeit von der Position angibt;
   - Berechnen mindestens eines Wertes ($\%Q_m$; $\%QB_m$, $\%QH_m$), der eine Drift der Pumpe (20) mittels der berechneten Position ($X_{calc}$) und der geschätzten Position ($X_{est}$) darstellt; und
   - Vergleichen des Wertes mit einem vorgegebenen Schwellenwert.

2. Verfahren nach vorhergehendem Anspruch, das eine Bestimmung der Referenzfunktion(en) (29, 37, 38) umfasst.

3. Verfahren nach vorhergehendem Anspruch, wobei die Bestimmung der Funktion nach einer Auslieferung des Turbinenmotors (1) und vor einer kommerziellen Nutzung des Turbinenmotors erfolgt.

4. Verfahren nach einem der vorhergehenden Ansprüche, wobei:

   - zwei geschätzte Positionen ($X_{est}1$, $X_{est}2$) des Ventils anhand der Druckdifferenz ($\Delta P$) und zwei Referenzfunktionen (37, 38), die die Druckdifferenz ($\Delta P$) in Abhängigkeit von der Position angeben, bestimmt werden;
   - zwei Werte ($\%QB_m$, $\%QH_m$) berechnet werden, die die Drift der Pumpe (20) mittels der berechneten Position ($X_{calc}$) und der geschätzten Positionen ($X_{est}1$, $X_{est}2$) darstellen; und
   - mindestens einer der Werte ($\%QB_m$, $\%QH_m$) mit dem vorgegebenen Schwellenwert verglichen wird.

5. Verfahren nach einem der vorhergehenden Ansprüche, wobei:

   - mindestens ein Momentanwert ($\%Q$; $\%QB$, $\%QH$) mittels der berechneten Position ($X_{calc}$) und der geschätzten Position ($X_{est}$) berechnet wird; und
   - mittels des Momentanwerts mindestens ein Mittelwert ($\%QB_m$, $\%QH_m$) aktualisiert wird, der die Drift der Pumpe (20) darstellt.

6. Verfahren nach einem der vorhergehenden Ansprüche, wobei:

   - zwei Momentanwerte ($\%QB$, $\%QH$) mittels der berechneten Position ($X_{calc}$) und der geschätzten Positionen ($X_{est}1$, $X_{est}2$) berechnet werden; und
   - mittels der Momentanwerte zwei Mittelwerte ($\%QB_m$, $\%QH_m$) aktualisiert werden, die die Drift der Pumpe (20) darstellen.

7. Verfahren nach einem der Ansprüche 5 oder 6, wobei der oder jeder Mittelwert ($\%Q_m$; $\%QB_m$, $\%QH_m$) ein gleitender Mittelwert ist.

8. Kraftstoffkreis (7) eines Turbinenmotors (1), wobei der Kreis umfasst:

   - mindestens eine Pumpe (20),
   - einen Dosierer (22), der ausgelegt ist, um von der Pumpe mit Kraftstoff versorgt zu werden, wobei der Dosierer einen Sensor (19) für eine Druckdifferenz an den Anschlüssen des Dosierers umfasst,
   - ein Ventil (24), das ausgelegt ist, um eine Druckdifferenz an den Anschlüssen zu regulieren, und
   - Mittel (26), die imstande sind, die Durchführung eines Verfahrens nach einem der vorhergehenden Ansprüche zu steuern.

9. Kreis nach vorhergehendem Anspruch, wobei die Pumpe (20) eine Verdrängerpumpe ist.

10. Turbinenmotor (1), der einen Kraftstoffkreis (7) nach einem der Ansprüche 8 bis 9 umfasst.

## Claims

1. A method for estimating a drift of a turbine engine (1) fuel pump (20),
   the method comprising the following steps:

   - measuring a pressure difference ($\Delta P$) at the terminals of a metering device (22) supplied with fuel by the pump (20);
   - calculating a position ($X_{calc}$) of a valve (24) regulating the pressure difference;
   - determining at least one estimated position ($X_{est}$) of the valve based on the pressure difference ($\Delta P$) and on at least one reference function (29, 37, 38) giving the pressure difference ($\Delta P$) as a function of the position;
   - calculating at least one value ($\%Q_m$; $\%QB_m$, $\%QH_m$) representing a drift of the pump (20) by means of the calculated position ($X_{calc}$) and of the estimated position ($X_{est}$); and

- comparing the value with a predetermined threshold.

2. The method according to the preceding claims which comprises a determination of the reference function(s) (29, 37, 38).

3. The method according to the preceding claim, wherein the determination of the function occurs after a delivery of the turbine engine (1) and prior to commercial exploitation of the turbine engine.

4. The method according to one of the preceding claims wherein:

    - two estimated positions ($X_{est}1$, $X_{est}2$) of the valve are determined based on the pressure difference ($\Delta P$) and on two reference functions (37, 38) giving the pressure difference ($\Delta P$) as a function of the position;
    - two values (%$QB_m$, %$QH_m$) are calculated representing the drift of the pump (20) by means of the calculated position ($X_{calc}$) and of the estimated positions ($X_{est}1$, $X_{est}2$); and
    - at least one of the values (%$QB_m$, %$QH_m$) is compared with the predetermined threshold.

5. The method according to one of the preceding claims, wherein:

    - at least one instantaneous value (%Q; %QB, %QH) is calculated by means of the calculated position ($X_{calc}$) and the estimated position ($X_{est}$); and
    - at least one average value (%$QB_m$, %$QH_m$) representing the drift of the pump (20) is updated by means of the instantaneous value.

6. The method according to one of the preceding claims, wherein:

    - two instantaneous values (%QB, %QH) are calculated by means of the calculated position ($X_{calc}$) and the estimated positions ($X_{est}1$, $X_{est}2$); and
    - two average values (%$QB_m$, %$QH_m$) representing the drift of the pump (20) are updated by means of the instantaneous values.

7. The method according to one of claims 5 or 6, wherein the or each average value (%$Q_m$; %$QB_m$, %$QH_m$) is a moving average.

8. A turbine engine (1) fuel circuit (7), the circuit comprising:

    - at least one pump (20),
    - one metering device (22) configured to be supplied with fuel by the pump, the metering device comprising a sensor (19) of a pressure difference at the terminals of the metering device,
    - one valve (24) configured to regulate a pressure difference at the terminals, and
    - means (26) able to control the implementation of a method according to any one of the preceding claims.

9. The circuit according to the preceding claim wherein the pump (20) is a positive displacement pump.

10. A turbine engine (1) comprising a fuel circuit (7) according to one of claims 8 to 9.

FIG. 1

FIG. 2

FIG. 3

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120219429 A